# EUROPEAN PATENT APPLICATION

(11) **EP 0 673 723 A1**
(43) Date of publication of application: **27.09.1995**
(21) Application number: 95301899.1
(22) Date of filing: 22.03.1995
(51) Int. Cl.: B25F 3/00, B25B 21/00

(54) **Drill configuration**

(30) Priority: 23.03.1994 AU PM4645/94
(71) Applicant: Black & Decker Inc., Newark Delaware 19711 (US)
(72) Inventor: McNair, John Duncan, Olinda, Victoria 3788 (AU)
(74) Representative: Stagg, Diana Christine

(57) **Abstract**

The present invention relates to a rotary power tool having two rotary drive heads (14, 18) which are adapted to rotate about spaced generally parallel axes (20, 21), the drive heads (14, 18) being relatively positionable so that it is possible to select a respective one of the two drive heads (14, 18) to be located in a forward operational position as desired.

## Description

The present invention relates to drills, particularly hand held power drills that are intended to carry out more than one function.

Combination power drills that enable a hole to be drilled and then a fastener to be rotatably driven into the preformed hole have been proposed in the past. Such proposals have included quick change adaptors to connect either a driver or a drill bit to the power drive of the drill or some mechanism comprising a double head enabling both a drill bit and a driver to be simultaneously installed. The former of these two general proposals has the substantial difficulty that the user must carry the two adaptors in some manner and continually change them when desired. Even with quick change connectors this process is relatively slow and tiresome for the operator. The second of these two general proposals often lead to complicated arrangements which are expensive to produce and lead to arrangements which are difficult in practice to use.

Examples of the aforementioned types of tools may be found in US Patent Nos 4 171 093, 4 810 916 and 1 650 911. US Patent No 4 171 083 discloses a tool which is first capable of drilling a hole and then by swinging up a percussion driver arrangement to an in-line position (in line with the drill bit) in front of the drill bit, capable of driving by percussion means a fastener into the hole first produced by the drill bit. The arrangement described does not show any means of rotary driving a rotary fastener and moreover the arrangement described is contructionally quite complicated modifying the conventional power drill arrangement considerably. US Patent No 4 810 911 discloses an arrangement where a rotary driver head and a drill bit driving head are arranged in line with one another and directed oppositely relative to each another. The arrangement is equally substantially different from what might be described as a conventional power drill and moreover, it would clearly be difficult for an operator to use in a safe and convenient manner. US Patent No 1 650 911 discloses an arrangement where a drill bit driving head and a rotary driver head are arranged so that the drill bit and rotary driver are generally parallel and point in the same direction, however, the disclosure is such that the drill bit would either have to be removed when rotary driving a fastener otherwise it would drill a second unwanted hole. The objective therefore of the present invention is to provide a power drill unit capable of drilling in sequence two holes (either separate or coaxial) or alternatively, drilling a first hole and thereafter rotary driving a fastener into the hole just formed; the unit being uncomplicated both to produce and use and without changing the general configuration of the portable power drill units.

According to the present invention there is provided a rotary power tool comprising a first drive head adapted to be rotatably driven about a first drive axis, a second drive head adapted to be rotatably driven about a second drive axis spaced from said first drive axis, and positioning means to relatively move said first and second drive heads so as to selectively position either said first or second drive head in a forward operational position relative to the other of said drive heads.

Preferably, the first and second drive axes are parallel or substantially parallel to one another although it is possible for the axes to be arranged at an angle (conveniently an acute angle) to one another. Preferably, in one embodiment the respective drive heads are relatively positioned by movement of one of said drive heads in a direction coincident with its drive axis. In a second preferred embodiment one of the drive heads is adapted to be demounted from said rotary tool to effect positioning of the other said drive head in the forward operational position. In a still further preferred embodiment, one of said drive heads is adapted for rotation about an axis perpendicular to its drive axis to effect positioning of the other said drive head in the forward operational position.

In accordance with a further preferred arrangement it is possible to mount three (or more) drive heads for relative movement with respect to one another to allow for selective operational positioning of one of the drive heads in a forward operational position. To some extent, the number of drive heads capable of being utilised is dependent upon the available space on the rotary power tool.

Conveniently the rotary power tool includes a drive motor, transmission means from the drive motor to the drive heads to rotatably drive each said drive head. In a possible alternative arrangement a drive motor can be provided for each said drive head with a separate drive transmission between the drive motor and the drive heads.

Preferably, the first drive head is adapted to permit connection of a rotary drive member (eg a screw driver head of any desired configuration) although it is desirable for the first drive head to be selectably used for connection of either a rotary drive member or a drill bit thereto. Conveniently the second drive head is adapted to selectably mount a desired drill bit thereto.

In accordance with a further aspect of the present invention there is provided a rotary power tool comprising a first drive head adapted to be rotatably driven about a first drive axis, at least one second drive head adapted to be rotatably driven about a second drive axis when mounted to said rotary power tool whereby the or each said second drive head is operationally located in a forward position relative to said first drive head, the or each second drive head being adapted for demounting from said rotary power tool whereby said first drive head is left in a forward operational position.

A preferred embodiment of the present invention will herein often be described with reference to the accompanying drawings, in which:
Figure 1 is a side elevation of a drill unit according to a first embodiment of the present invention, showing the unit being used to drill a hole;
Figure 1A is a view of the drill unit of Figure 1 partly broken away showing certain operational features of the drill unit;
Figure 2 is a side elevation view of the drill unit configured to rotatably drive a fastener following drilling of a hole as shown in Figure 1; Figure 3 is an illustrative perspective view of the drill unit in the process of being reconfigured from the position shown in Figure 1 to the position shown in Figure 2;
Figure 4A is a perspective view of a drill unit according to a second embodiment of the present invention;
Figure 4B is a partially exploded view of the drill unit shown in Figure 4A;
Figure 5A is a perspective view of a drill unit according to a third embodiment of the present invention;
Figure 5B is a partially exploded view of the drill unit shown in Figure 5A; and
Figure 6 is a perspective view of a drill unit according to a further embodiment of the present invention.

Referring to the drawings, the drill unit 10 may be either battery operated or may be operated by connection to an external power source as desired. The drill unit is generally of conventional configuration comprising a handle grip 11 and a body portion 12 housing the operating mechanisms with an operating trigger switch 13. A first drive head 14 is provided in conventional position and is rotatably driven about a first axis 20 by a main gear train transmission 15 from the drive motor 16. The gear train transmission 15 may include conventionally known arrangements to allow desired rotary speed changes to be made at the drive head 14 or selecting the direction of rotation of the drive head 14. Of course any other conventionally know performance capabilities such as, clutches, percussion means or the like could be built into this drill configuration.

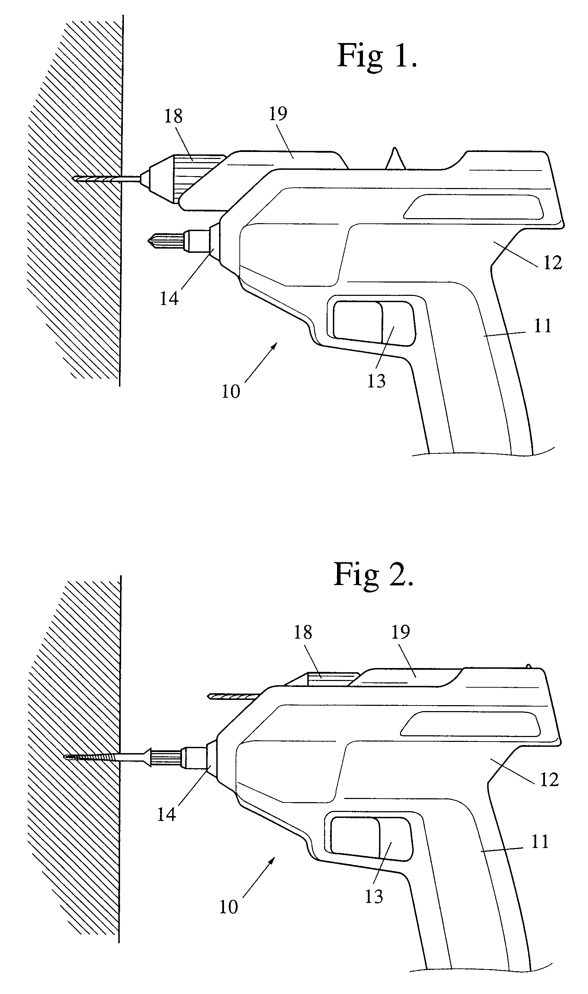

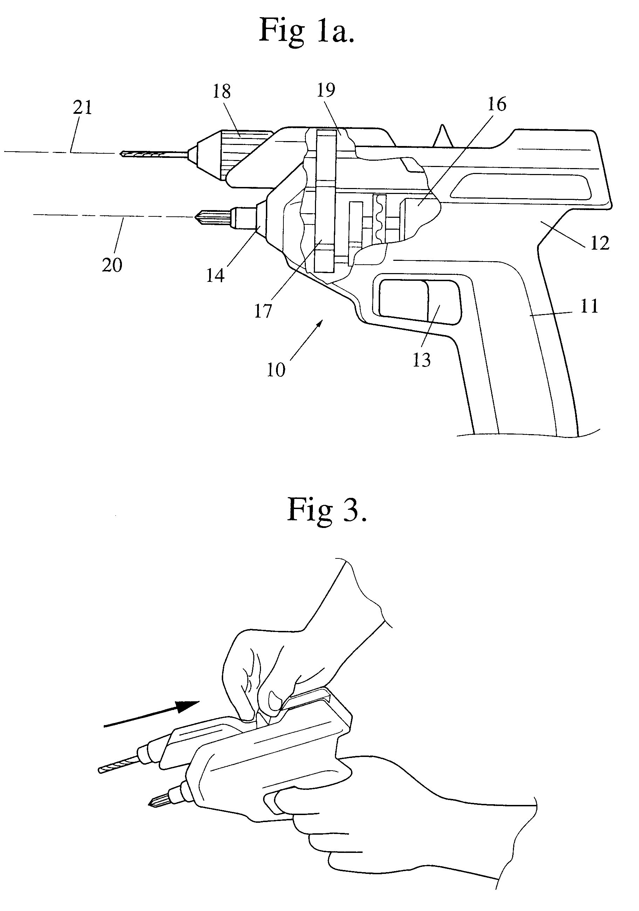

Normally conventional gear train transmissions 15 include a final drive gear 17 that either directly or indirectly drives the first drive head 14. According to the present invention, a second rotary drive head 18 is provided rotatably mounted on a slide carriage 19 such that the second rotary drive head rotates about a second rotation axis 21 spaced from and substantially parallel to the first rotation axis 20. In the position shown in Figures 1 and 1A the second rotary drive head 18 includes a drive gear 22 intermeshed with either the gear 17 or an idler gear (not shown) used to adjust the direction of rotation of the second drive head 18. Moreover, in the position where the second drive head 18 is extended forwardly, as shown in Figures 1 and 1A, there is provided some form of reaction stop (not shown) against which pressure can be applied when drilling a hole using the head 18. The reaction stop is of course necessarily retractable to allow the slide carriage to be moved axially to the position shown in Figure 2 where the drill bit is withdrawn behind the forward extent of the first drive head 14. In this withdrawn position, the gear 22 is moved out of engagement with the gear 17 driving the first drive head 14. In consequence the drill does not rotate in the position shown in Figure 2. To ease movement of the gear 22 back to intermesh with the gear 17, the gear 22 may be formed with tapered teeth or some form of synchromesh arrangement may be employed. As is shown in Figure 2, the drill bit is not operational but the first drive head 14 may be rotated to drive a rotary fastener such as a screw or the like. If desired the gear 22 may have a smaller diameter than the gear 17 to increase the rotational speed of the drill bit to increase its cutting performance.

In the drill unit described, the drill is essentially conventional in general configuration and the modifications necessary to install and operate the second rotational head 18 are relatively small to thereby minimise the additional production costs. Moreover, if the unit is desired to be operated as a drill only, the second head 18 may be moved to the position shown in Figure 2 and a conventional drill bit engaging chuck may replace the driver connection means on the first driving head 14 so that this head may be used to connection drill bits thereto in the normal way.

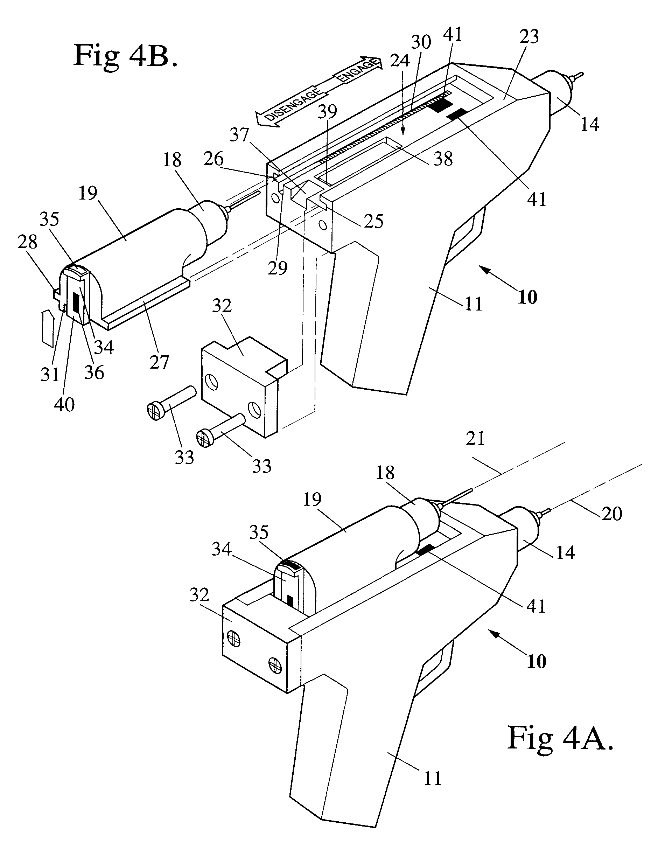

Figures 4A and 4B illustrate a further preferred embodiment. In this embodiment, the drill unit 10 is similarly configured to the embodiment shown in Figures 1 to 3 including a first drive head 14 capable of being rotatably driven by a motor (not shown). On the top face 23 there is provided a guideway 24 having an inverted T shape with lateral grooves 25,26 capable of cooperating with side ledges 27,28 on a auxiliary slide carriage 19 carrying a second drive head 18. Located within a downwardly directed groove 29 from one of the lateral grooves 26 is a compression spring 30 adapted to cooperate with a downwardly directed tab or lug 31 on the carriage 19 which will travel along the groove 29 when the carriage 19 is positioned in the guideway 24. An end member 32 is provided to close the rear end of the guideway 24 and is attached to the drill unit 10 by screws 33 or by any other suitable means. As is illustrated in Figure 4A, the slide carriage 19 is urged towards the rear end of the guideway 24 by the spring 30, however, it will be apparent to those skilled in the art that any other means of urging the carriage in this direction could also be employed. Arranged at the rear of the slide carriage 19 there is a movable latch member 34 that has an upper grip tab 35 so that the latch member can be gripped and moved upwardly against a downward urging force supplied by a spring 36 or similar means. The latch member 34 will be moved upwardly by a ramp 37 when the slide carriage 19 is positioned in the guideway 24. Two limit positions of the slide carriage 19 are defined by downwardly directed openings 38,39 into which the lower end 40 of the latch member will fit when the slide carriage is positioned to allow the latch member to move downwardly under action of the spring 36. The forward opening 38 together with the latch member 34 acts as a reaction stop to allow the second rotary drive head 18 to be operational when in this forward position. The rear opening 39 is not essential as the spring 30 will urge the carriage to stay in the rear position when the latch member is lifted out of the forward opening 38. In this embodiment, the slide carriage 19 houses a drive motor and drive transmission (not shown) to drive the drive head 18 when in the operationally forward position. To achieve this electrical contacts 41 can be provided to establish electric power supplied to the drive motor in the forward position of the slide carriage 19, with power supply only when the drill unit trigger 13 is operationally depressed.

In a possible alternative, the drive arrangements may be similar to those shown in Figures 1 to 3 where the drive head 18 is driven by an auxiliary drive train driven through an opening in the bottom of the guideway 24 where it is capable of connecting with the main drive transmission driving the drive head 14.

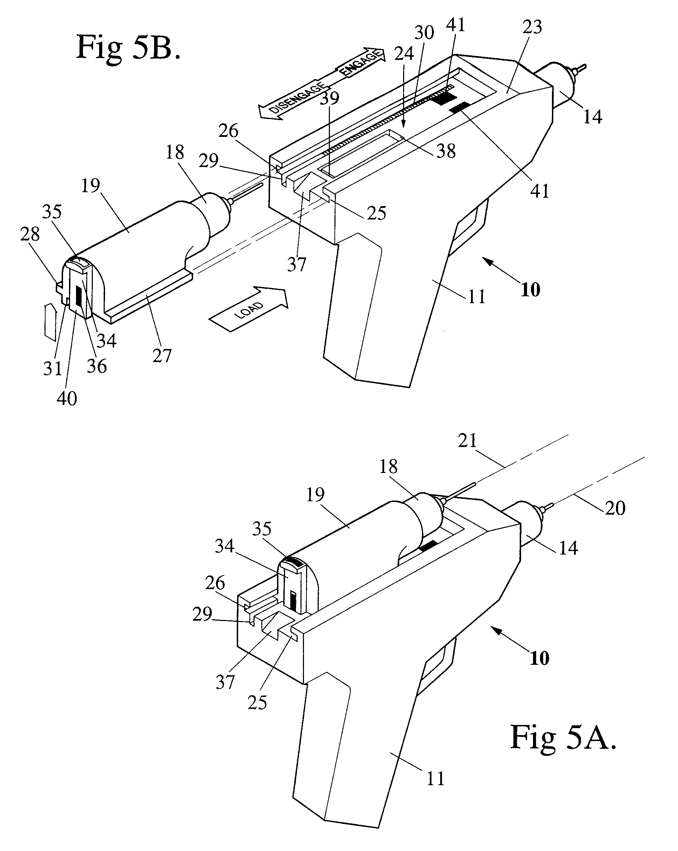

Figures 5A and 5B illustrate a further embodiment similar to that shown in Figures 4A and 4B except that in this case it is possible to completely demount the slide carriage 19 and second drive head 18. Like features have been given the same reference numerals as in Figures 4A and 4B. If desired, separate slide carriages and drive heads could be provided to operationally engage in the guideway 24 so that selective operation of same could be possible. Also removal or demounting of the slide carriage is possible with this embodiment to effect forward operational positioning of the first drive head 14.

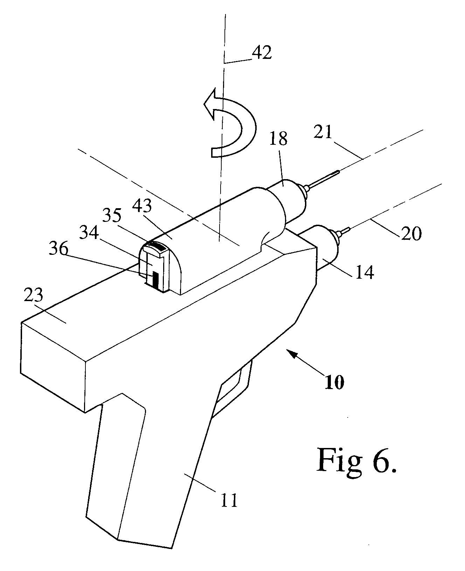

Figure 6 illustrates a still further preferred embodiment. In this case a housing 43 carrying a second drive head 18 is mounted to the drill unit 10 in a manner permitting swivelling motion about axis 42 perpendicular to either of the drive axis 21 or 20. When swung to the left or the right, the housing 43 disconnects operational drive to the drive head 18 either by disconnecting an electrical contact (as per Figures 4A, 4B) or by disengaging a drive transmission element (as per Figures 1 to 3). In this swing condition the first drive head 14 is left in a forward operational position. When the housing is swung back to the illustrated position, drive is possible to the second drive head 18 which is then located in the forward most operational position.

It will, of course, be apparent that appropriate switch means may be provided in all the aforesaid embodiments so that only the forward most drive head is driven in the operational position when the drill trigger 13 is depressed. In a still further possible arrangement the housing mounting the second drive head 18 might be mounted for movement lateral into the housing of the drill unit 10.

## Claims

**1** A rotary power tool comprising a first drive head adapted to be rotatably driven about a first drive axis, a second drive head adapted to be rotatably driven about a second drive axis spaced from said first drive axis, and positioning means to relatively move said first and second drive head so as to selectively position either said first or said second drive head in a forward operational position relative to the other of said drive heads.

**2** A rotary power tool according to Claim 1 wherein said first and second drive axes are parallel or substantially parallel to one another.

**3** A rotary power tool according to Claim 1 or Claim 2 further including a drive motor and drive transmission means from said drive motor to said drive head to rotatably drive each said drive head.

**4** A rotary power tool according to Claim 3 wherein said drive transmission means includes a first drive connection adapted to rotatably drive said first drive head about said first drive axis.

**5** A rotary power tool according to Claim 4 wherein said drive transmission means includes an auxiliary drive connection arranged to drive said second drive head about said second drive axis.

**6** A rotary power tool according to Claim 5 wherein said auxiliary drive connection is driven from said first drive connection when said second drive head is operationally located in a forward position relative to said first drive head.

**7** A rotary power tool according to Claim 1 wherein two or more second drive heads are provided.

**8** A rotary power tool according to Claim 1 or Claim 7 wherein a separate drive motor is provided for each said drive head.

**9** A rotary power tool according to any one of Claims 1 to 8 wherein the second drive head is mounted on a slide carriage adapted to move in a direction parallel to said first drive axis between the forward operational position and rear withdrawn position.

**10** A rotary power tool according to Claim 9 including means to urge said slide carriage towards said rear withdrawn position.

**11** A rotary power tool according to Claim 9 or Claim 10 including latch means to selectably retain said slide carriage at said forward operational position.

**12** A rotary power tool according to any one of Claims 1 to 8 wherein the second drive head is mounted to an auxiliary housing part with said auxiliary housing part being mounted for rotational movement about an axis perpendicular to said first drive axis.

**13** A rotary power tool according to Claim 12 wherein latch means is provided to retain said second drive head in the forward operational position with the second drive axis parallel to the first drive axis.

**14** A rotary power tool comprising a first drive head adapted to be rotatably driven about a first drive axis, at least one second drive head adapted to be rotatably driven about a second drive axis when mounted to said rotary power tool whereby the or each said second drive head is operationally located in a forward position relative to said first drive head, the or each said second drive head being adapted for demounting from said rotary power tool whereby said first drive head is left in a forward operational position.
